# EUROPÄISCHE PATENTSCHRIFT

(11) **EP 1 994 829 B1**
(45) Veröffentlichungstag und Bekanntmachung des Hinweises auf die Patenterteilung: **05.08.2009**
(21) Anmeldenummer: 07010524.2
(22) Anmeldetag: 25.05.2007
(51) Int. Cl.: A22C 15/00, B23Q 7/04

(54) **Rauchstockgreifer**
Smoking rod gripper
Crochet de barre de fumoir

(43) Veröffentlichungstag der Anmeldung: 26.11.2008
(73) Patentinhaber: Albert Handtmann Maschinenfabrik GmbH & Co. KG, 88400 Biberach (DE)
(72) Erfinder: Liermann, Torsten, 88471 Laupheim (DE); Fuchs, Markus, 71364 Winnenheim (DE); Mayer, Steffen, 71227 Rutesheim (DE); Abele, Benjamin, 73550 Waldstetten (DE)
(74) Vertreter: Grünecker, Kinkeldey, Stockmair & Schwanhäusser Anwaltssozietät

(56) Entgegenhaltungen:
- DE-A1- 10 252 876
- DE-C1- 3 930 876
- US-A- 4 547 931
- US-A- 4 878 705
- US-A- 5 945 798
- US-A1- 2004 207 222
- US-A1- 2005 159 093

## Beschreibung

Die Erfindung betrifft ein Verfahren zum Greifen und Übergeben eines Rauchstocks, der in Schleifen oder paarweise auf Haken aufgehängte Produkte, insbesondere Würste, eingeführt ist sowie ein entsprechendes Greifsystem.

Aus der DE-A-10252876 ist bereits ein Verfahren und eine Vorrichtung zum Greifen und Übergeben eines Rauchstocks bekannt, wobei der Rauchstock mittels Greifer gegriffen, fixiert und angehoben wird. Der Rauchstock wird sodann transportiert und abgelegt. Aus dieser Druckschrift ist es nicht bekannt, den Rauchstock durch Drehen des Rauchstocks um seine Längsachse auszurichten. Ferner zeigt diese Druckschrift nicht zwei Greifmodi, sondern nur einen Greifmodus, in dem der Rauchstock fest fixiert ist.

Bei der industriellen Wurstherstellung werden die produzierten Produkte direkt von der Füllmaschine auf einen Hänger übergeben. Die Wurstpaare, bzw. Wurstschleifen werden dabei vorzugsweise an der Abteilstelle zwischen zwei Würsten an einem Haken aufgehängt. Anschließend werden die Würste manuell mit einem Rauchstock aufgenommen. Dieser wird dann vom Bediener in einen Rauchwagen gehängt. Der Rauchwagen wiederum wird anschließend in eine Räucherkammer geschoben. Die Vielfalt der unterschiedlichen Rauchstöcke, Rauchwagen und Wurstprodukte erschwert eine Automatisierung der Beladung von Rauchstöcken und Rauchwagen erheblich. Daher sind bisher keine automatisierten Systeme im Einsatz. Alternativ zu dieser Vorgehensweise gibt es anstelle der Räucherkammern auch Anlagen, die die Produkte in einem kontinuierlichen Durchlauf räuchern. Wegen den einfacheren Bedingungen zur Automatisierung von kontinuierlichen Anlagen sind hier bereits automatisierte Systeme zur Beschickung und Entladung dieser Anlagen im Einsatz.

Zur Übernahme der an den Haken eines Hängers hängenden Würste wird zwischen die aufgehängten Produkte der Rauchstock eingeführt. Dazu greift zunächst ein Greifmodul den Rauchstock an einem Ende. In einem nächsten Arbeitsgang fährt ein Handhabungssystem oder Roboter den Rauchstock in den Hänger ein. Im nächsten Arbeitsgang fährt der Roboter das zweite Greifmodul an den Rauchstock und greift diesen am anderen Ende. So kann dann der Roboter den Rauchstock mit samt den Produkten aus dem Hänger entnehmen. Mit diesem System lassen sich keine hohen Taktzahlen erreichen. Darüber hinaus müssen die Würste hierbei sehr gleichförmig sein und müssen so aufgehängt sein, dass sie einen Zwischenraum zum Einführen des Rauchstocks freigeben. Bei dieser Lösung muss ein Haken im mittleren Bereich einer Hakengruppe entfernt werden, damit das zweite Greifmodul den Rauchstock greifen kann. Als eine Hakengruppe wird die Gruppe an Haken verstanden, von welchen die Produkte auf einen Rauchstock übernommen werden. Dadurch wird die maximale Beladung des Rauchstocks reduziert. Dies fällt insbesondere bei Rauchstöcken für Rauchwagen ins Gewicht,
da diese nur ca. 1.000 mm lang sind. Weiterhin erschwert bei dieser bekannten Lösung das Greifen des Rauchstocks an einem Ende das sichere Ablegen des Rauchstocks in einen Rauchwagen.

Insbesondere gestaltet sich das Ablegen auch schwierig, da viele Rauchwagen mit Toleranzfehlern behaftet sind.

Ferner ergibt sich im Stand der Technik das Problem, dass beim Abnehmen der auf den Haken aufgehängten Produkten die Produkte nicht ordnungsgemäß nach unten ausgerichtet sind, sondern schräg auf dem Rauchstock aufliegen. Das bedeutet, dass beispielsweise die Abdrehstelle zwischen zwei Produkten, sprich zwischen zwei Würsten, nicht am oberen Ende bzw. an der oberen Spitze eines sternförmig ausgebildeten Rauchstocks hängt. Dies liegt insbesondere auch daran, dass der Rauchstock beim Anheben seitlich an den Haken vorbeigeführt werden muss.

Hiervon ausgehend liegt der vorliegenden Erfindung die Aufgabe zugrunde, ein Verfahren und ein Greifsystem bereitzustellen, die auf einfache und zuverlässige Art und Weise ein automatisches Greifen und Übergeben eines Rauchstocks ermöglichen.

Erfindungsgemäß wird diese Aufgabe durch die Merkmale der Ansprüche 1 und 10 gelöst.

Gemäß der vorliegenden Erfindung wird also der Rauchstock, der bereits unter den Haken zwischen den aufgehängten Produkten positioniert ist, mit mindestens zwei Greifern fest gegriffen, wobei während der Entnahme die Greifer den Rauchstock halten und fixieren. Unter Fixieren wird hier verstanden, dass der Greifer den Rauchstock so festhält, dass er sich weder um seine Längsachse noch in Längsrichtung bewegen kann. Dies ermöglicht eine hohe Handhabungsgeschwindigkeit ohne Verrutschen des Rauchstockes im Greifer. Ferner ermöglicht das erfindungsgemäße Verfahren das Ausrichten des Rauchstocks und der darauf aufgehängten Produkte durch Drehen des Rauchstocks um seine Längsachse. Wie bereits erläutert, kommt es beim Abnehmen der auf den Haken aufgehängten Produkte dazu, dass die Produkte nicht ordnungsgemäß nach unten hängen sondern etwas schräg auf dem Rauchstock aufliegen. Durch Drehen des Rauchstocks um seine Längsachse L kann der Rauchstock und die Produkte so ausgerichtet werden, dass beispielsweise die Abdrehstelle zwischen zwei Würsten am oberen Ende eines Rauchstocks, vorteilhafterweise auf einer Spitze eines Rauchstocks mit sternförmiger Kontur, zu liegen kommt. Durch die Schwerkraft der Wurstschleifen richten sich
dann die Würste automatisch so aus, dass sie nach unten hängen. Der Rauchstock kann dann zu einer Rauchstockablage transportiert werden, beispielsweise mit einem Handhabungssystem bzw. Roboterarm, wobei der Rauchstock dabei in den Greifern fixiert ist. Durch die Fixierung wird eine hohe Handhabungsgeschwindigkeit ohne Verrutschen des Rauchstocks ermöglicht. Schließlich wird der Rauchstock auf einer Rauchstockablage, insbesondere einer Rauchstockablage eines Rauchwagens abgelegt.

Gemäß der vorliegenden Erfindung wird in Schritt b) die Fixierung des Rauchstocks gelöst, so dass der Rauchstock in den Greifern um seine Längsachse drehbar und in Längsrichtung verschiebbar ist, so dass der Rauchstock automatisch durch die Schwerkraft der aufgehängten Produkte ausgerichtet wird. Somit wird auf einfache Art und Weise ein automatisches Ausrichten der Produkte bzw. der Wurstpaare oder -schleifen nach unten ohne zusätzlichen Antrieb ermöglicht. Damit ist eine sichere Entnahme der Wurstschleifen aus dem Hänger möglich, bei der der Rauchstock und die daran hängenden Produkte automatisch durch die Schwerkraft der Wurstschleifen ausgerichtet werden. Damit können die Wurstschleifen genau an den Abdrehstellen aufgehängt werden, was mögliche Druckstellen reduziert.

Vorteilhafterweise wird auch in Schritt d) die Fixierung gelöst. Dies ermöglicht den Ausgleich von Geometriefehlern der Rauchstockauflage beim Ablegen der Rauchstöcke dadurch, dass sich der Rauchstock beim Ablegen in die Rauchstockablage in seiner Längsrichtung bis auf Anschlag bewegen kann. Dies ist insbesondere deshalb wichtig, weil viele Rauchwagen mit Toleranzfehlern behaftet sind, die eine automatische Be- oder Entladung sehr aufwändig machen.

Gemäß der vorliegenden Erfindung greift der Greifer vor Schritt a) den bereits in die Produktpaare oder Schleifen eingeführten Rauchstock, in einem Bereich zwischen den Haken. Dies ermöglicht, dass die Produkte abgenommen werden können, ohne dass die aufgehängten Produkte beschädigt werden.

Vorteilhafter Weise weisen die Aufhängehaken einer Gruppe, die zur Abnahme durch den Rauchstock bestimmt ist, jeweils einen bestimmten konstanten Abstand voneinander auf, wobei mindestens ein Greifer den Rauchstock im mittleren Rauchstockbereich greift. Somit ist gemäß der vorliegenden Erfindung eine volle Rauchstockbehängung möglich, ohne dass einzelne Haken aus der Hakengruppe entfernt werden müssen. Das Greifen des Rauchstocks im mittleren Bereich ermöglicht eine vereinfachte Ablage in die Rauchstockaufnahme unter voller Nutzung des Auflagebereichs an den Enden des

Rauchstockes. Damit wird den sehr beengten Platzverhältnissen in einem Rauchwagen Rechnung getragen.

Gemäß einer weiteren Ausführungsform der vorliegenden Erfindung wird im Schritt b) der Rauchstock im Greifer gehalten und der Greifer um eine zur Längsachse des Rauchstocks parallel verlaufenden Achse verschwenkt, so dass sich eine relative Drehung des Rauchstocks um seine Längsachse ergibt. Somit kann bei dieser Ausführungsform die freie Drehbewegung, die durch das nicht Fixieren in dem vorherigen Ausführungsbeispiel ermöglicht wurde, z.B. durch einen zusätzlichen Antrieb im Greifer als Zwangsbewegung ausgeführt werden, um den Rauchstock und die aufgehängten Produkte auszurichten. Dabei kann der Rauchstock vorzugsweise fixiert werden, wobei sich dennoch eine relative Drehung des Rauchstocks um seine Längsachse ergibt. Die erzwungene Drehbewegung um die zur Längsachse des Rauchstocks parallel verlaufende Achse kann auch durch eine vom Roboterarm oder Handhabungssystem erzeugte Schwenkbewegung durchgeführt werden.

Gemäß einer bevorzugten Ausführungsform können sich dann die Schritte a) und b) zumindest teilweise zeitlich überlappen. Das bedeutet, dass bereits beim Anheben des Rauchstocks der Rauchstock relativ in seiner Längsachse verdreht wird.

Im Schritt d) kann dann der Rauchstock eine durch einen Roboter zwangsgeführte Bewegung in Längsrichtung durchführen, wobei gleichzeitig eine Kraftmessung zur Bestimmung, ob der Rauchstock auf Anschlag fährt, erfolgt. Somit können Toleranzfehler des Rauchwagens ausgeglichen werden.

Ein erfindungsgemäßes Greifsystem zum Durchführen des Verfahrens nach Anspruch 1 weist zwei wählbare Greifmodi auf, einen ersten Greifmodus, in dem die Greifer den Rauchstock halten und fixieren und einen zweiten Greifmodus, in dem die Greifer den Rauchstock so halten, dass er um seine Längsachse drehbar und in Längsrichtung verschiebbar ist. Dabei kann der Greifer von einer Steuereinrichtung entweder im ersten oder zweiten Greifmodus angesteuert werden. Das erfindungsgemäße Greifsystem ermöglicht somit auf einfache Art und Weise ein automatisches Ausrichten des Rauchstocks ohne zusätzlichen Antrieb, da im zweiten Greifmodus der Rauchstock durch die Gewichtskraft der daran hängenden Produkte so ausgerichtet werden kann, dass die Produkte nach unten hängen und auf ihrer Abdrehstelle aufgehängt werden.

Vorteilhafterweise sind die Greifer jeweils als Greifzange ausgebildet, die gegenüberliegende, aufeinander zu bewegbare Greifarme aufweisen und die den Rauchstock im wesentlichen ringförmig umschließen und fixieren. Unter aufeinander zu bewegbare Greifarme ist zu verstehen, dass zumindest einer der Greifarme in Richtung des anderen Greifarms bewegbar ist. Die Greifzange kann auch scherenförmig aneinander vorbei laufende Greifarme umfassen, die den Rauchstock halten und fixieren. In diesem Fall muss über die Ansteuerung der Öffnungs- / Schließwinkel formatabhängig eingestellt werden. Die Greifergeometrie ist dabei an den jeweiligen Rauchstockquerschnitt angepasst.

Wenn der Greifer als Greifzange ausgebildet ist, kann durch einfaches geringfügiges Auseinanderbewegen der Greifarme die Fixierung gelöst werden, so dass kein zusätzlicher Antrieb zum Fixieren und Lösen der Fixierung notwendig ist. Es ist jedoch auch möglich, dass der Greifer eine separate Klemmeinrichtung umfasst, die den Rauchstock im ersten Greifmodus fixiert. Eine solche Klemmeinrichtung, z. B. Klemmplatte kann mit oder ohne separaten Antrieb realisiert werden.

Vorteilhafterweise sind die Greifarme schmal ausgebildet, wobei die Dicke der Greifarme kleiner ist als der Abstand zwischen den in Schleifen oder paarweise aufgehängten Produkten und kleiner als der Abstand der Haken von denen die Produkte auf den Rauchstock aufgenommen werden. Somit können die Greifarme einfach zwischen den Würsten bzw. zwischen den Haken eingreifen, ohne die Würste zu verletzen. Es müssen auch keine Haken entnommen werden, damit die Greifer im mittleren Bereich des Rauchstocks greifen können. Vorteilhafterweise liegt die Dicke der Greifarme in einem Bereich von ca. 1 bis ca. 30 mm.

Es ist vorteilhaft, wenn der Rauchstock eine sternförmige Außenkontur aufweist. Somit kann beispielsweise die Abdrehstelle zwischen zwei Würsten auf einer Spitze der sternförmigen Kontur aufliegen.

Wenn die Greifer eine zusätzliche Schwenkachse aufweisen, kann sich der Rauchstock im zweiten Greifmodus stärker verdrehen.

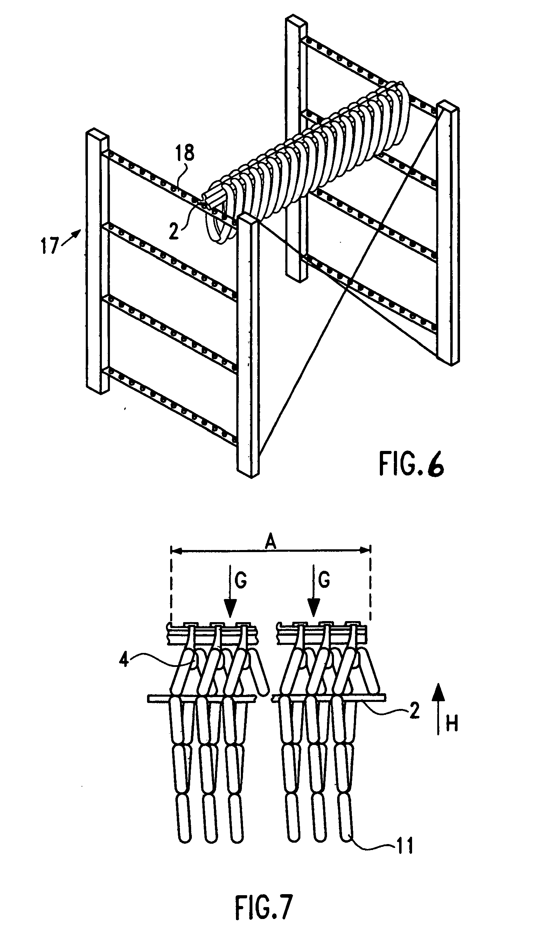

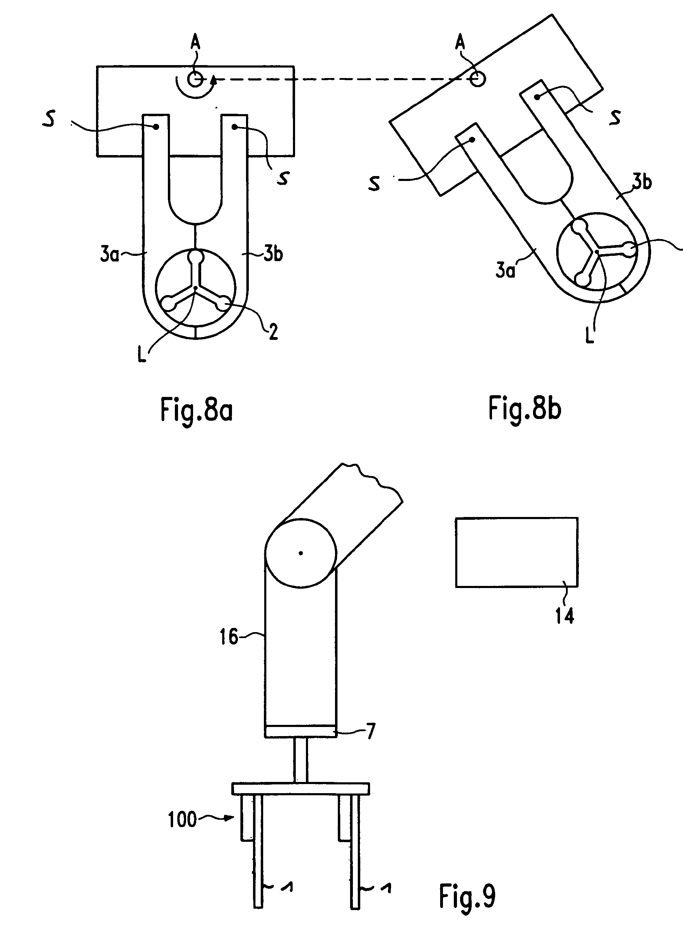

Die vorliegende Erfindung wird unter Bezugnahme der folgenden Zeichnungen näher erläutert.
Figur 1 zeigt in perspektivischer Darstellung eine mögliche Ausführungsform eines Greifsystems gemäß der vorliegenden Erfindung in einem ersten Betriebsmodus.
Figur 2 zeigt das in Figur 1 gezeigte Ausführungsbeispiel in einem zweiten Betriebsmodus.
Figur 3a zeigt schematisch eine Vorderansicht eines Greifers in einem ersten Greifmodus.
Figur 3b zeigt den in Figur 3a gezeigten Greifer in einem zweiten Betriebsmodus.
Figur 4 zeigt eine Seitenansicht des in den Figuren 3a und 3b gezeigten Greifers.
Figur 5 zeigt schematisch eine Seitenansicht einer Füllmaschine mit einem Hänger und einer Einrichtung zum Zuführen eines Rauchstocks.
Figur 6 zeigt schematisch einen Rauchwagen
Figur 7 zeigt schematisch einen in Wurstschleifen eingeführten Rauchstock.
Figur 8a zeigt eine schematische Vorderansicht eines Greifers gemäß einem zweiten Ausführungsbeispiel.
Figur 8b zeigt den in Figur 8a gezeigten Greifer in verschwenkter Position.
Figur 9 zeigt schematisch ein Greifsystem gemäß der vorliegenden Erfindung.

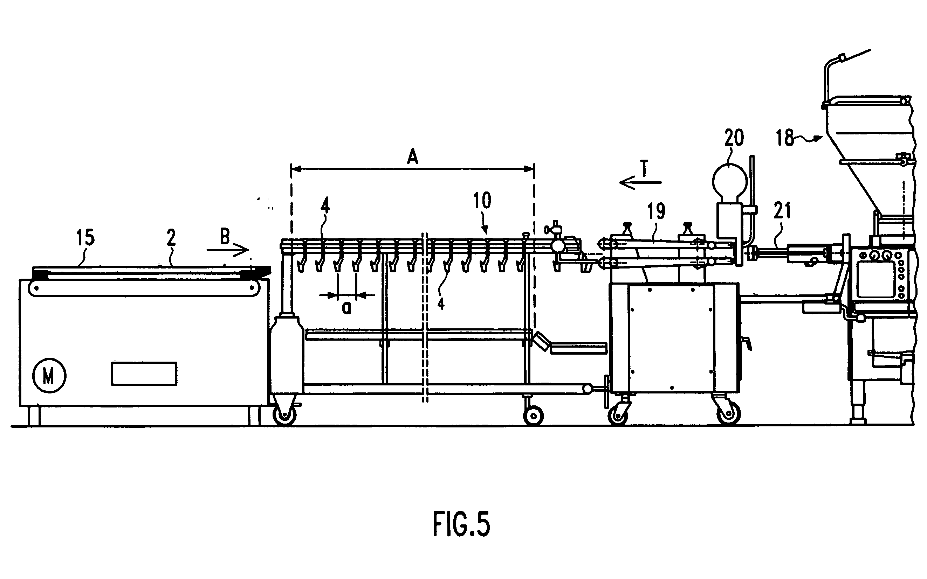

Figur 5 zeigt die herkömmlichen Bestandteile einer Füllvorrichtung zum Befüllen von Wursthüllen mit pastöser Masse. In bekannter Weise umfasst eine Füllmaschine einen Trichter 18 sowie ein Füllrohr 21, über das die pastöse Masse in eine Wursthülle gefüllt
   wird. Dabei können die Würste mit einer Abdreheinheit oder einem Clipmodul in Einzelwürste unterteilt werden. Über eine Transporteinrichtung 19 wird der gefüllte Wurststrang zu einem Hänger 10 gefördert, wobei die Würste in offenen oder geschlossenen Schleifen oder paarweise an den Aufhängehaken 4 aufgehängt werden. Die Aufhängehaken werden in einer Führung geführt und über ein Antriebselement, beispielsweise einen Zahnriemen oder eine Kette mit Hilfe eines nicht dargestellten Motors umlaufend angetrieben. So werden die auf den Haken 4 hängenden Würste durch den Hänger 5 in einen Abnahmebereich A des Hängers 5 transportiert. In dem Abnahmebereich A wird ein Rauchstock 2 über eine Einrichtung 15 zum Positionieren eines Rauchstocks zwischen die aufgehängten Produkte geschoben und positioniert, wie insbesondere auch aus Figur 7 hervorgeht. Der positionierte Rauchstock muss dann von einem Greifsystem gegriffen und zu einer Rauchstockablage 18, insbesondere einen Rauchwagen 17, wie er in Figur 9 dargestellt ist, befördert werden. Wie aus Figur 6 hervorgeht, weist ein Rauchwagen eine Vielzahl von Auflageflächen 18 auf, auf denen der Rauchstock abgelegt werden kann. Der Rauchwagen 17 kann eine Vielzahl von nebeneinander und übereinander angeordneten Rauchstöcken 2 aufnehmen.

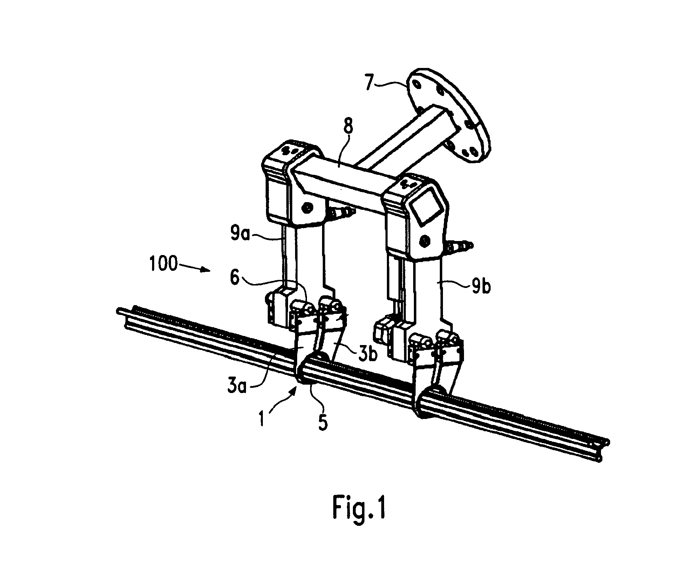

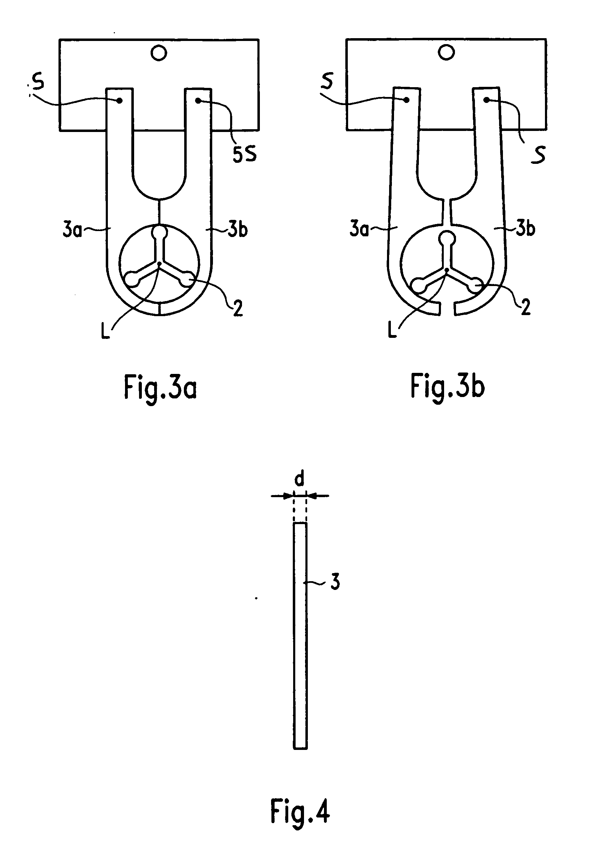

Figur 1 zeigt ein Greifsystem 100 zum Greifen und Übergeben des in Schleifen oder paarweise auf den Haken 4 aufgehängte Produkte eingeführten Rauchstocks 2. Das Greifsystem 100 umfasst hier zwei Greifer 1. Die Greifer sind an zwei Haltern 9a, b befestigt, die wiederum über einen Querträger 8 miteinander verbunden sind. Weiter weist das Greifsystem 100 ein Anschlusselement 7 auf, über das die Greifer mit einem Handhabungssystem bzw. mit einem Roboterarm 16 verbunden werden kann (siehe Figur 9). Bei dem in Figur 1 gezeigten Ausführungsbeispiel sind die Greifer 1 jeweils als Greifzange ausgebildet, die gegenüberliegende, aufeinander zu bewegbare Greifarme 3a, b aufweisen, die den Rauchstock im wesentlichen ringförmig umschließen und fixieren. Wie auch aus Figur 3a hervorgeht, sind die Greifarme drehbar um die Schwenkachse S gelagert und können beispielsweise durch einen pneumatischen Antrieb 6 um die Schwenkachse S bewegt werden. Es ist jedoch auch ausreichend, wenn einer der Greifarme 3a, b beweglich oder antreibbar ausgebildet ist.

In Figur 1 ist ein Pneumatikantrieb der Greifer 1 gezeigt. Es ist jedoch auch ein Servoantrieb möglich, der noch ein exakteres, prozessgesteuertes Ansteuem ermöglicht.

Figuren 1 und 3a zeigen einen ersten Betriebsmodus des erfindungsgemäßen Greifsystems, in dem der Greifer den Rauchstock so hält, dass der Rauchstock fixiert ist, d. h. dass er weder um seine Längsachse 11 gedreht, noch in Längsrichtung bewegt werden kann. Der Rauchstock wird von dem Greifer 1 eingeklemmt. Dazu können die beiden Arme 3a, 3b aufeinander stoßen. Die Greifarme 3a, b bilden zusammen eine ringförmige, hier eine im wesentlichen kreisförmige Aussparung 5, wobei die Greifergeometrie an den Rauchstockquerschnitt angepasst ist, so dass in geschlossenem Zustand des Greifers der Rauchstock 2 fixiert ist.

Figur 3b zeigt einen zweiten Greifmodus, in dem der Greifer den Rauchstock 2 so hält, dass er um seine Längsachse L drehbar und in Längsrichtung verschiebbar ist. Dazu werden die Greifarme 3a, b wie durch die Pfeile in Figur 3a dargestellt ist, leicht auseinander bewegt. In diesem Zweiten Greifmodus kann sich der Rauchstock um seine Längsachse drehen und ist in Längsrichtung verschiebbar. Über eine Steuereinrichtung 14 (siehe Figur 9) kann der bzw. die Greifer 1 entweder in einem in den in Figur 3a gezeigten ersten Betriebsmodus oder in dem in Figur 3b gezeigten zweiten Betriebsmodus betrieben werden.

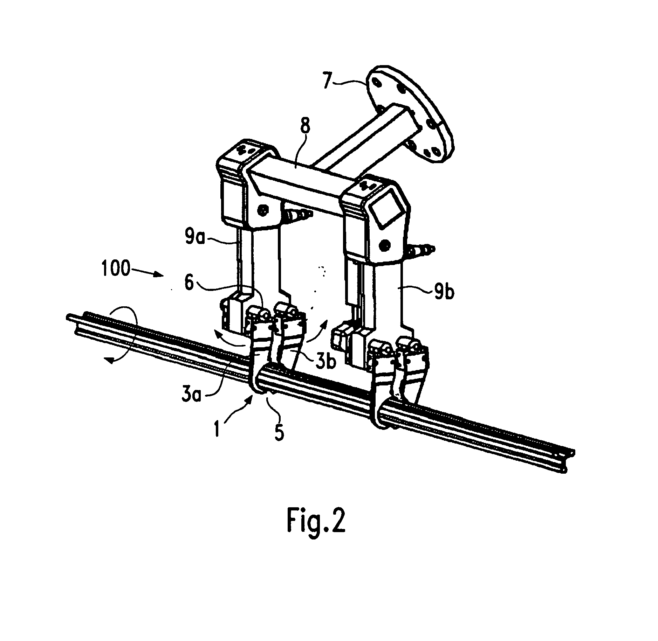

Figur 2 zeigt ebenfalls die Greifer 1 im zweiten Betriebsmodus. Der zweite Betriebsmodus eignet sich insbesondere, wie auch nachfolgend noch genauer im Zusammenhang mit dem erfindungsgemäßen Verfahren erläutert wird, zum Ausrichten des Rauchstocks 2 und der darauf aufgehängten Produkte 11 durch Drehen des Rauchstocks um seine Längsachse L. Wird die Fixierung des Rauchstocks gelöst, so wird der Rauchstock automatisch durch die Schwerkraft der aufgehängten Produkte ausgerichtet, so dass die Produkte ordnungsgemäß nach unten hängen.

Vorteilhafterweise ist bei dem in Figuren 1 bis 3 gezeigten Ausführungsbeispiel kein gesonderter Antrieb zum Fixieren des Rauchstocks 2 erforderlich. Es ist jedoch auch möglich, dass die Greifer eine separate Klemmeinrichtung umfassen, die den Rauchstock im ersten Greifmodus fixiert.

Diese Klemmvorrichtung kann mit oder ohne separatem Antrieb vorgesehen sein.

Wie aus Figur 4 hervorgeht, werden die Greifarme 1 sehr schmal ausgebildet, wobei die Dicke d der Greifarme 1 kleiner ist, als der Abstand zwischen den in Schleifen oder paarweise aufgehängten Produkten und kleiner als der Abstand a von den Haken 4, von denen die Produkte auf den Rauchstock 2 aufgenommen werden. Wie aus Figur 5 hervorgeht, weisen die Haken 4 einer Hakengruppe, die eine Anzahl von Produkten aufhängt, die auf einen Rauchstock gehängt werden sollen, einen konstanten Abstand a zueinander auf. Dadurch, dass die Greifarme schmaler ausgebildet sind als der Abstand a zwischen den einzelnen Haken, können die Greifer seitlich oder von oben in einen Bereich zwischen den Haken den Rauchstock 2 greifen (siehe auch Pfeil G in Figur 7). Vorteilhafterweise liegt die Dicke der Greifarme in einem Bereich von ca. 1 bis ca. 30 mm.

Der Abstand zwischen zwei Greifern 1 liegt in einem Bereich von ca. 100 mm bis zur maximalen Rauchstocklänge. Das kraftschlüssige Greifprinzip könnte durch ein formschlüssiges Greifprinzip oder durch Kombination aus Kraft- / Form- / Reibschluss ersetzt werden.

Figur 8a und b zeigen ein Greifsystem gemäß einem zweiten Ausführungsbeispiel der vorliegenden Erfindung, das im wesentlichen den im Zusammenhang mit Figuren 3a und 3b gezeigten Ausführungsbeispiel entspricht, wobei jedoch der Greifer 1 eine zusätzliche Schwenkachse A aufweist, die im wesentlichen parallel zur Längsachse des Rauchstocks 2 verläuft, so dass der Greifer in geschlossener Position (siehe Figur 8a) in der sie den Rauchstock 2 hält und fixiert um die Schwenkachse A verschwenkbar ist (siehe Figur 8b). Dadurch, dass der Rauchstock 2 mit dem Greifer mit verschwenkt wird, ergibt sich eine relative Drehung des Rauchstocks 2 um seine Längsachse L, wie insbesondere beim Vergleich der Figuren 8a und 8b deutlich wird. Diese Drehung kann wirksam zur Ausrichtung des Rauchstocks und der darauf aufgehängten Produkte wie nachfolgend im Zusammenhang mit dem erfindungsgemäßen Verfahren näher erläutert wird, verwendet werden. Bei dieser in Figur 8 gezeigten Ausführungsform kann das Greifsystem, das durch den Roboterarm 16 in Längsrichtung zur Ablage des Rauchstocks auf eine Rauchstockablage 18 bewegt wird, einen Anschlagsensor umfassen, der einen Anschlag des Rauchstocks bei Bewegung in Längsrichtung detektiert, um so Toleranzfehler in der Rauchstockablage ausgleichen zu können. Sobald der Anschlagsensor einen Anschlag detektiert, stoppt der Roboterarm 16 die Bewegung in Längsrichtung, so dass der Rauchstock abgelegt werden kann.

Es ist auch möglich, dass die in Figur 1 bis 3 gezeigte Ausführungsform eine zusätzliche Schwenkachse A umfasst, so dass die Greifer um eine zur Längsachse L parallele Achse A verschwenkbar sind.

Nachfolgend wird in Zusammenhang mit den Figuren 1 bis 3 eine erste Ausführungsform des erfindungsgemäßen Verfahrens näher erläutert.

Vor dem erfindungsgemäßen Verfahren werden, wir zuvor erläutert, die Produkte paarweise oder in Schleifen auf die Haken 4, wie in Figur 7 dargestellt ist, aufgehängt und der Rauchstock 2 wird in den Aufnahmebereich A des Hängers 10 zwischen die aufgehängten Produkte mit Hilfe der Einrichtung 15 eingefahren.

Der Roboterarm 16 bewegt dann die Greifer des Greifersystems 100 entweder von oben (siehe Pfeile G in Figur 7) oder aber von der Seite zwischen den aufgehängten Produkten bzw. zwischen die Haken 4 über oder neben den Rauchstock und schließt die Greifer derart, dass sie den Rauchstock 2 halten und fixieren, wie beispielsweise in Figuren 1 und 3a gezeigt ist. Das Eingreifen kann mit geschlossenen Greifern erfolgen um die Produkte nicht zu schädigen.

Vorzugsweise greift dabei mindestens ein Greifer 1 im mittleren Rauchstockbereich ein. Da die Greifer 1 wie zuvor beschrieben dünn ausgebildet sind, muss dazu kein Haken 4 entnommen werden. Der Rauchstock kann also im mittleren Bereich gegriffen werden, ohne die Aufnahmenkapazität des Rauchstocks zu reduzieren. Das Greifen des Rauchstocks 2 im mittleren Bereich ermöglicht auch eine vereinfachte Ablage in der Rauchstockaufnahme 18 im Rauchwagen 17 unter voller Nutzung des Auflagebereichs am Ende des Rauchstocks 2. Damit wird den sehr beengten Platzverhältnissen in einem Rauchwagen Rechnung getragen.

Der Rauchstock wird dann zur Entnahme der Produkte 11 aus den Haken 4 wie durch Pfeil H in Figur 7 angedeutet ist, angehoben, wobei während der Entnahme die Greifer 1 den Rauchstock 2 halten und fixieren. Somit ist sicher gestellt, dass der Rauchstock im Greifer bei der Entnahme nicht verrutscht. Die Handhabungsgeschwindigkeit kann somit erhöht werden.

Beim Anheben des Rauchstockes können die Produkte, d. h. die Würste schräg auf dem Rauchstock zu liegen kommen. D. h., dass die Würste beispielsweise nicht mit der Abdrehstelle am oberen Ende, d. h. an einer Spitze des sternförmigen Rauchstocks zu liegen kommen, sondern, dass die Wurst schräg auf dem Rauchstock 2 aufliegt. Dies könnte jedoch zu Druckstellen führen. Aus diesem Grund wird die Fixierung des Rauchstocks gelöst, so dass der Rauchstock in den Greifern 1 um seine Längsachse L drehbar und in Längsrichtung verschiebbar ist, so dass der Rauchstock 2 automatisch durch die Schwerkraft der aufgehängten Produkte 11 gedreht und ausgerichtet wird, so dass die Produkte ordnungsgemäß nach unten hängen. Das Lösen der Fixierung kann beispielsweise wie in Zusammenhang mit Figur 3b erläutert wurde, durch leichtes Auseinanderbewegen der Greiferarme 3a, 3b erfolgen, wobei das Greifsystem von einer Steuereinrichtung 14 entsprechend angesteuert wurde, um diesen zweiten Greifmodus auszuführen. Zum transportieren des Rauchstocks 2 zu einer Rauchstockablage 18 mittels Handhabungssystem oder Roboterarm 16 steuert die Steuereinrichtung 14 das Greifersystem 100 so an, dass es im ersten Greifmodus arbeitet und den Rauchstock 2 fixiert. Durch die Fixierung des Rauchstocks beim Transfer zur Rauchstockablage 18 kann eine hohe Handhabungsgeschwindigkeit ohne Verrutschen des Rauchstocks im Greifer realisiert werden.

Das Aufschwingen der Produkte auf dem Rauchstock während des Transfers vom Hänger zur Rauchstockablage 18 kann reduziert werden indem der Rauchstock beim Abbremsen bei Richtungsänderungen schräg angestellt wird, d.h. das in Bewegungsrichtung betrachtete vordere Ende des Rauchstocks wird angehoben.

Beim Ablegen des Rauchstocks auf die Rauchstockablage 18, beispielsweise im Rauchstockwagen steuert die Steuerung 14 das Greifersystem 100 wieder derart an, dass der Greifer im zweiten Greifmodus arbeitet, indem die Rauchstockfixierung abgeschaltet wird. Die abgeschaltete Rauchstockfixierung ermöglicht den Ausgleich von Geometriefehlem der Rauchstockauflage beim Ablegen der Rauchstöcke, dadurch, dass der Rauchstock wenn er auf Anschlag fährt, in Längsrichtung zurück bewegbar ist. Das ist insbesondere deshalb wichtig, weil viele Rauchwagen mit Toleranzfehlem behaftet sind, die eine automatische Be- oder Entladung sehr aufwändig machen. Beim Ablegen kann der Rauchstock schräg in die Ablage 18 abgelegt werden, so dass der Rauchstock einseitig in die Auflageposition rutscht. Die Greifer können dann ganz geöffnet werden, so dass der Rauchstock in die Auflageposition fallen kann.

In einer zweiten Ausführungsform der vorliegenden Erfindung werden die in Figuren 8a und 8b gezeigten Greifer 1 verwendet. Das Verfahren entspricht im wesentlichen dem zuvor erläuterten Verfahren, wobei jedoch die freie Drehbewegung um die Längsachse L des Rauchstock, die im ersten Ausführungsbeispiel durch das Lösen der Fixierung ermöglicht wird, durch einen zusätzlichen Antrieb im Greifer als Zwangsbewegung ausgeführt werden kann. Nach oder während der Entnahme der Produkte aus dem Haken 4 wird demnach zum Ausrichten des Rauchstocks und der darauf aufgehängten Produkte 11 der Greifer 1 um eine zur Längsachse L des Rauchstocks 2 parallel verlaufenden Achse A ( Schwenkachse erstreckt sich durch den Greifer) verschwenkt (Figur 8b), so dass sich eine relative Drehung des Rauchstocks 2 um seine Längsachse L ergibt. Durch diese relative Drehung I um die Längsachse L kann, wie zuvor beschrieben, der Rauchstock und die darauf aufgehängten Produkte ausgerichtet werden, wobei dann die Produkte ordnungsgemäß nach unten hängen. Dabei können die Schritte des Anhebens des Rauchstocks zur Entnahme der Produkte sowie das Verschwenken der Greifer um die Achse A zumindest teilweise zeitlich überlappen. Diese Schwenkbewegung kann alternativ oder zusätzlich auch durch eine Schwenkbewegung des Roboterarms erzeugt werden, wobei dann die Schwenkachse durch den Roboterarm verläuft.

Bei dem zweiten Verfahren gemäß der vorliegenden Erfindung kann zum Ablegen des Rauchstocks eine durch einen Roboter zwangsgeführte Bewegung in Längsrichtung erfolgen, wobei gleichzeitig eine Kraftmessung erfolgt, um zu bestimmen, ob der Rauchstock in der Rauchstockablage 18 bei seiner Bewegung in Längsrichtung auf Anschlag fährt. Bei Anschlag bzw. einer bestimmten erfassten Kraft, kann dann die Bewegung des Rauchstocks in Längsrichtung gestoppt werden.

Gemäß einer weiteren Ausführungsform wäre es dann auch denkbar, bei dem ersten Ausführungsbeispiel bzw. dem Verfahren entsprechend der ersten Ausführungsform die Greifer zusätzlich um die Achse A zu verschwenken, wenn der Greifer die Fixierung des Rauchstocks gelöst hat, um den Rauchstock auszurichten.

Die vorherigen Ausführungsformen wurden in Zusammenhang mit Greifern beschrieben, die gegenüberliegende aufeinander zu bewegbare Greifarme aufweisen, die in geschlossener Position aufeinander stoßen. Es ist jedoch auch möglich, die Greifarme derart auszubilden, dass sie scherenförmig aneinander vorbei laufen, um den Rauchstock zu halten und zu fixieren. In diesem Fall muss über die Ansteuerung 14 der Öffnungs-/Schließwinkel formatabhängig eingestellt werden.

Die vorliegende Erfindung wurde im Zusammenhang mit einem Rauchstock näher erläutert. Der Ausdruck Rauchstock soll hier jedoch nicht beschränkend sein, und soll auch andere stangenförmige Teile mit darauf aufgehängten Produkten einschließen, die im Anschluss nicht geräuchert werden. Das erfindungsgemäße Greifersystem eignet sich, wie zuvor beschrieben, insbesondere zur Entnahme von Rauchstöcken aus Wursthängern. Es eignet sich auch zur Entnahme von Rauchstöcken aus Rauch- / Trockenwagen, aus Magazinen und Waschanlagen oder ähnlichen Maschinen und zur Ablage von Rauchstöcken in Rauch- / Trockenwagen, in Magazine, Waschanlagen oder ähnliche Maschinen.

## Patentansprüche

1. Verfahren zum Greifen und Übergeben eines Rauchstocks (2), der in Schleifen oder in paarweise auf Haken (4) aufgehängte Produkte (11), insbesondere Würste, eingeführt ist , mit folgenden Schritten:
a) Anheben des Rauchstocks (2) zur Entnahme der Produkte aus den Haken (4) mit mindestens zwei Greifern (1), die den Rauchstock (2) greifen, wobei während der Entnahme die Greifer den Rauchstock (2) halten und fixieren,
b) Ausrichten des Rauchstocks (2) und der darauf aufgehängten Produkte (11) durch Drehen des Rauchstocks (2) um seine Längsachse L,
c) Transportieren des Rauchstocks (2) zu einer Rauchstockablage, wobei der Rauchstock in den Greifern fixiert ist, und
d) Ablegen des Rauchstocks auf einer Rauchstockablage (18).

2. Verfahren nach Anspruch 1,
**dadurch gekennzeichnet, dass**
in Schritt b) die Fixierung des Rauchstocks (2) gelöst wird, so dass der Rauchstock in den Greifern (1) um seine Längsachse L drehbar und in Längsrichtung verschiebbar ist, so dass der Rauchstock (2) automatisch durch die Schwerkraft der aufgehängten Produkte (11) ausgerichtet wird.

3. Verfahren nach Anspruch 1,
**dadurch gekennzeichnet, dass**
in Schritt d) die Fixierung gelöst wird.

4. Verfahren nach mindestens einem der Ansprüche 1 bis 3,
**dadurch gekennzeichnet, dass**
vor Schritt a) die Greifer (1) den bereits in die Produktpaare oder Schleifen eingeführten Rauchstock, in einem Bereich zwischen den Haken greifen.

5. Verfahren nach mindestens einem der Ansprüche 1 bis 4,
**dadurch gekennzeichnet, dass**
die Aufhängehaken (4) einer Gruppe jeweils einen bestimmten konstanten Abstand (a) voneinander aufweisen und mindestens ein Greifer (1) den Rauchstock im mittleren Rauchstockbereich greift.

6. Verfahren nach mindestens einem der Ansprüche 1 bis 5,
**dadurch gekennzeichnet, dass**
im Schritt b) die Greifer (1) den Rauchstock (2) halten und die Greifer (1) um eine zur Längsachse L des Rauchstocks (2) parallel verlaufenden Achse A verschwenkt werden, so dass sich eine relative Drehung des Rauchstocks (2) um seine Längsachse L ergibt.

7. Verfahren nach Anspruch 6,
**dadurch gekennzeichnet, dass**
in Schritt b) die Greifer den Rauchstock (2) fixieren.

8. Verfahren nach Anspruch 7,
**dadurch gekennzeichnet, dass**
die Schritte a) und b) zumindest teilweise überlappen.

9. Verfahren nach Anspruch 7,
**dadurch gekennzeichnet, dass**
in Schritt d) der Rauchstock (2) eine durch einen Roboter zwangsgeführte Bewegung in Längsrichtung durchführt, wobei gleichzeitig eine Kraftmessung zur Bestimmung, ob der Rauchstock auf Anschlag fährt, erfolgt.

10. Greifsystem (100), insbesondere zum Greifen eines Rauchstock (2), der in Schleifen oder paarweise aufgehängte Produkte (11), insbesondere Würste, eingeführt ist mit mindestens zwei Greifern (1), die den Rauchstock (2) umgreifen, wobei
das Greifsystem (100) zwei wählbare Greifmodi aufweist,
einen ersten Greifmodus, in dem die Greifer (1) den Rauchstock (2) halten und fixieren und
einen zweiten Greifmodus, in dem die Greifer (1) den Rauchstock (2) so halten, dass er um seine Längsachse L drehbar und in Längsrichtung verschiebbar ist, und
eine Steuereinrichtung (14) zum Ansteuem der Greifer (1) in entweder dem ersten oder zweiten Greifmodus.

11. Greifsystem nach Anspruch 10,
**dadurch gekennzeichnet, dass**
die Greifer (1) jeweils als Greifzange ausgebildet sind, die gegenüberliegende aufeinander zu bewegbare Greifarme (3a, b) aufweisen, die den Rauchstock (2) im wesentlichen ringförmig umschließen und fixieren, oder
die scherenförmig aneinander vorbeilaufende Greifarme umfassen, die den Rauchstock (2) halten und fixieren.

12. Greifsystem nach Anspruch 11,
**dadurch gekennzeichnet, dass**
durch Auseinanderbewegen der Greifarme (3a, b) die Fixierung lösbar ist.

13. Greifsystem nach mindestens einem der Ansprüche 10 bis 12,
**dadurch gekennzeichnet, dass**
die Greifer (1) eine separate Klemmeinrichtung umfassen, die den Rauchstock (2) im ersten Greifmodus fixiert.

14. Greifsystem nach Anspruch 11,
**dadurch gekennzeichnet, dass**
die Greifarme (1) schmal ausgebildet sind, wobei die Dicke d der Greifarme (1) kleiner ist als der Abstand a zwischen den in Schleifen oder paarweise aufgehängten Produkten und kleiner als der Abstand a von den Haken (4), von denen die Produkte auf den Rauchstock aufgenommen werden.

15. Greifsystem nach Anspruch 14,
**dadurch gekennzeichnet, dass**
die Dicke der Greifarme in einem Bereich von ca. 1 bis ca. 30 mm liegt.

16. Greifsystem nach mindestens einem der Ansprüche 9 bis 15,
**dadurch gekennzeichnet, dass**
der Rauchstock (2) eine sternförmige Kontur aufweist.

17. Greifsystem nach mindestens einem der Ansprüche 10 bis 16,
**dadurch gekennzeichnet, dass**
die Greifer eine Schwenkachse (A) aufweisen, die im wesentlichen parallel zur Längsachse L des Rauchstocks verläuft.

## Claims

1. Method of gripping and transferring a smoke stick (2) introduced into products (11), in particular sausages, hung in loops or in pairs on hooks (4), with the following steps:
a) lifting of the smoke stick (2) for the removal of the products from the hooks (4) with at least two grippers (1) which grip the smoke stick (2), wherein the grippers hold and fix the smoke stick (2) during removal,
b) alignment of the smoke stick (2) and of the products (11) suspended from it by rotation of the smoke stick (2) about its longitudinal axis L,
c) transport of the smoke stick (2) to a smoke stick depository, wherein the smoke stick is fixed in the grippers, and
d) deposition of the smoke stick on a smoke stick depository (18).

2. Method according to Claim 1,
**characterised in that**
in step b) the fixing of the smoke stick (2) is released so that the smoke stick can be rotated about its longitudinal axis L and moved in its longitudinal direction in the grippers (1) so that the smoke stick (2) is aligned automatically by the force of gravity on the suspended products (11).

3. Method according to Claim 1,
**characterised in that**
the fixing is released in step d).

4. Method according to at least one of the Claims 1 to 3,
**characterised in that**
before step a) the grippers (1) grip the smoke stick introduced into the product pairs or loops in a region between the hooks.

5. Method according to at least one of the Claims 1 to 4,
**characterised in that**
the suspension hooks (4) of a group each have a certain constant spacing (a) to one another and at least one gripper (1) grips the smoke stick in the central smoke stick region.

6. Method according to at least one of the Claims 1 to 5,
**characterised in that**
in step b) the grippers (1) hold the smoke stick (2) and the grippers (1) are pivoted about an axis A running parallel to the longitudinal axis L of the smoke stick (2) so that a relative rotation of the smoke stick (2) is produced about its longitudinal axis L.

7. Method according to Claim 6,
**characterised in that**
in step b) the grippers fix the smoke stick (2).

8. Method according to Claim 7,
**characterised in that**
the steps a) and b) overlap at least partially.

9. Method according to Claim 7,
**characterised in that**
in step d) the smoke stick (2) carries out a constrained movement in the longitudinal direction guided by a robot, wherein simultaneously a force measurement takes place to determine whether the smoke stick is moving against the limit stop.

10. Gripper system (100), in particular for gripping a smoke stick (2) introduced into products (11), in particular sausages, hung in loops or in pairs with at least two grippers (1), which grip the smoke stick (2), wherein
the gripper system (100) has two selectable gripping modes,
a first gripping mode, in which the grippers (1) hold and fix the smoke stick (2) and
a second gripping mode, in which the grippers (1) hold the smoke stick (2) such that it can be rotated about its longitudinal axis L and moved in the longitudinal direction, and
a control device (14) for controlling the grippers (1) in either the first or second gripping mode.

11. Gripper system according to Claim 10,
**characterised in that**
the grippers (1) are each formed as gripper tongs, which have oppositely situated gripper arms (3a, b) which can move towards one another, which close around and fix the smoke stick (2) in an essentially ring-shaped manner,
or which comprise scissor-like gripper arms running past one another, which hold and fix the smoke stick (2).

12. Gripper system according to Claim 11,
**characterised in that**
the fixing can be released by the gripper arms (3a, b) moving away from one another.

13. Gripper system according to at least one of the Claims 10 to 12,
**characterised in that**
the grippers (1) comprise a separate clamping device which fixes the smoke stick (2) in the first gripping mode.

14. Gripper system according to Claim 11,
**characterised in that**
the gripper arms (1) are formed narrow, wherein the thickness d of the gripper arms (1) is smaller than the distance a between the products suspended in loops or in pairs and is smaller than the spacing a of the hooks (4) on which the products are accommodated on the smoke stick.

15. Gripper system according to Claim 14,
**characterised in that**
the thickness of the gripper arms lies in a range from approx. 1 to about 30 mm.

16. Gripper system according to at least one of the Claims 9 to 15,
**characterised in that**
the smoke stick (2) has a star-shaped contour.

17. Gripper system according to at least one of the Claims 10 to 16,
**characterised in that**
the grippers have a pivot axis (A) which essentially runs parallel to the longitudinal axis L of the smoke stick.

## Revendications

1. Procédé pour saisir et transférer une barre de fumoir (2) qui est engagée dans des produits (11), en particulier des saucisses, suspendus en chapelets ou par paires sur des crochets (4), comprenant les étapes suivantes :
a) soulèvement de la barre de fumoir (2) pour retirer les produits des crochets (4), à l'aide d'au moins deux éléments de préhension (1) qui saisissent la barre de fumoir (2), les éléments de préhension maintenant et bloquant la barre de fumoir (2) pendant ledit retrait,
b) orientation de la barre de fumoir (2) et des produits (11) qui y sont suspendus, par mise en rotation de la barre de fumoir (2) autour de son axe longitudinal L,
c) transport de la barre de fumoir (2) jusqu'à un support de barre de fumoir, transport pendant lequel la barre de fumoir est bloquée dans les éléments de préhension, et
d) dépôt de la barre de fumoir sur un support de barre de fumoir (18).

2. Procédé selon la revendication 1, **caractérisé par le fait qu'**à l'étape b), le blocage de la barre de fumoir (2) est libéré, de sorte que la barre peut être mise en rotation autour de son axe longitudinal L dans les éléments de préhension (1) et être déplacée dans le sens de sa longueur, de manière à ce que la barre de fumoir (2) soit orientée automatiquement sous l'effet de la force de gravité des produits (11) suspendus.

3. Procédé selon la revendication 1, **caractérisé par le fait que** le blocage est libéré à l'étape d).

4. Procédé selon au moins une des revendications 1 à 3, **caractérisé par le fait qu'**avant l'étape a), les éléments de préhension (1) saisissent la barre de fumoir qui est déjà engagée dans les paires ou chapelets de produits, dans une zone située entre les crochets.

5. Procédé selon au moins une des revendications 1 à 4, **caractérisé par le fait que** les crochets de suspension (4) d'un groupe présentent chaque fois une distance (a) constante définie entre eux et qu'au moins un élément de préhension (1) saisit la barre de fumoir dans la partie médiane de la barre.

6. Procédé selon au moins une des revendications 1 à 5, **caractérisé par le fait qu'**à l'étape b), les éléments de préhension (1) maintiennent la barre de fumoir (2) et sont pivotés autour d'un axe A qui est parallèle à l'axe longitudinal L de la barre de fumoir (2), de manière à obtenir une rotation relative de la barre de fumoir (2) autour de son axe longitudinal L.

7. Procédé selon la revendication 6, **caractérisé par le fait qu'**à l'étape b), les éléments de préhension bloquent la barre de fumoir (2).

8. Procédé selon la revendication 7, **caractérisé par le fait que** les étapes a) et b) se chevauchent au moins en partie.

9. Procédé selon la revendication 7, **caractérisé par le fait qu'**à l'étape d), la barre de fumoir (2) exécute un mouvement dans la direction longitudinale, guidé de manière forcée par un robot, et en même temps une mesure de force est réalisée pour déterminer si la barre de fumoir (2) vient en butée.

10. Système de préhension (100), destiné en particulier à saisir une barre de fumoir (2) engagée dans des produits (11), notamment des saucisses, suspendus en chapelets ou par paires, comprenant au moins deux éléments de préhension (1) qui entourent la barre de fumoir (2), le système de préhension (100) présentant deux modes de préhension sélectionnables, à savoir
un premier mode de préhension, dans lequel les éléments de préhension (1) maintiennent et bloquent la barre de fumoir (2), et
un deuxième mode de préhension, dans lequel les éléments de préhension (1) tiennent la barre de fumoir (2) de manière telle qu'elle puisse être mise en rotation autour de son axe longitudinal L et être déplacée dans le sens de sa longueur, et
comprenant un dispositif de commande (14) pour activer les éléments de préhension (1) dans le premier ou le deuxième mode de préhension.

11. Système de préhension selon la revendication 10, **caractérisé par le fait que** les éléments de préhension (1) sont réalisés respectivement sous forme de pince de préhension qui présente des mâchoires de prise (3a, b), lesquelles sont situées en vis-à-vis l'une de l'autre et peuvent être rapprochées l'une de l'autre et entourent la barre de fumoir (2) de façon sensiblement annulaire et la bloquent, ou bien qui comporte des mâchoires de prise, lesquelles passent l'une devant l'autre à la manière de ciseaux et maintiennent et bloquent la barre de fumoir (2).

12. Système de préhension selon la revendication 11, **caractérisé par le fait que** le blocage peut être libéré en éloignant l'une de l'autre les mâchoires de préhension (3a, b).

13. Système de préhension selon au moins une des revendications 10 à 12,
**caractérisé par le fait que** les éléments de préhension (1) comprennent un dispositif de serrage distinct qui bloque la barre de fumoir (2) dans le premier mode de préhension.

14. Système de préhension selon la revendication 11, **caractérisé par le fait que** les mâchoires de prise (1) sont réalisées sous une forme étroite, l'épaisseur d des mâchoires (1) étant inférieure à la distance a entre les produits suspendus en chapelets ou par paires et inférieure à la distance a entre les crochets (4) à partir desquels les produits sont repris sur la barre de fumoir.

15. Système de préhension selon la revendication 14, **caractérisé par le fait que** l'épaisseur des mâchoires de prise se situe dans une plage comprise entre environ 1 et environ 30 mm.

16. Système de préhension selon au moins une des revendications 9 à 15, **caractérisé par le fait que** la barre de fumoir (2) présente un contour en forme d'étoile.

17. Système de préhension selon au moins une des revendications 10 à 16, **caractérisé par le fait que** les éléments de préhension présentent un axe de pivotement (A) qui est sensiblement parallèle à l'axe longitudinal L de la barre de fumoir.
